# EUROPÄISCHE PATENTANMELDUNG

(11) **EP 0 937 903 A2**
(43) Veröffentlichungstag der Anmeldung: **25.08.1999**
(21) Anmeldenummer: 98123263.0
(22) Anmeldetag: 07.12.1998
(51) Int. Cl.: F16D 25/12

(54) **Drosselglied für hydraulische Verstelleinrichtungen bei Kraftfahrzeugen**

(30) Priorität: 24.02.1998 DE 19807447; 02.11.1998 DE 19850323
(71) Anmelder: Mannesmann Sachs Aktiengesellschaft, 97424 Schweinfurt (DE)
(72) Erfinder: Ebert, Angelika, 97421 Schweinfurt (DE); Tulaczko, Boleslaw Dipl.-Ing., 97464 Niederwerrn (DE); Riess, Thomas Dipl.-Ing. (FH), 96179 Rattelsdorf/Mürsbach (DE); Grosspietsch, Wolfgang Dipl.-Ing.(FH), 97422 Schweinfurt (DE); Pagels, Olaf, 97493 Bergrheinfeld (DE); Krappmann, Klaus, 97469 Gochsheim (DE)

(57) **Zusammenfassung**

Drosselglied zum Einbau in hydraulische Verstelleinrichtungen, insbesondere für Kraftfahrzeugkupplungen mit einem Zylinder, entweder einem Geberzylinder oder einem Nehmerzylinder, wobei der mit dem Betätigungspedal des Kraftfahrzeuges in Verbindung stehende Geberzylinder mit dem Nehmerzylinder durch eine mit einem Fluid gefüllte Hydraulikleitung in Verbindung steht, in welcher das Drosselglied angeordnet ist, welches dem Durchfluß des Fluids in beide Durchflußrichtungen unterschiedliche Drosselwiderstände entgegensetzen kann, wobei das Drosselglied aus einer Scheibe besteht, welche mindestens eine Bohrung und/oder mindestens einen Durchlaßkanal aufweist, wobei sich die Scheibe bei Strömung des Fluids in den beiden Durchflußrichtungen hin- und herbewegen kann, wobei die Scheibe einmal an einem ersten Anschlag und ein anderes mal an einem zweiten Anschlag anschlagen kann. Von Vorteil ist die kostengünstige Anbringung des Drosselgliedes in Form der Scheibe in dem Bewegungsraum, wobei dieser als Übergang von der Hydraulikleitung zur Zuleitung zum Zylinder in seinem Durchmesser angeformt werden kann, wobei lediglich der zweite Anschlag von der zu befestigenden Anschlagscheibe gebildet wird. Die als Ventil wirkende Scheibe zeichnet sich durch geringe Kosten aus.

## Beschreibung

Die Erfindung betrifft ein Drosselglied zum Einbau in hydraulische Verstelleinrichtungen bei Kraftfahrzeugen, insbesondere für Karftfahrzeugkupplungen gemäß dem Oberbegriff des Anspruchs 1.

Aus der DE 37 44 070 C2 ist eine blockiergeschützte, hydraulische Bremsanlage für Fahrzeuge zu entnehmen, bestehend aus einem Hauptbremszylinder, aus einem Druckmittelvorratsbehälter und mindestens einer Radbremse, die über eine Bremsleitung mit dem Hauptbremszylinder und über eine Entlastungsleitung mit dem Druckmittelvorratsbehälter verbunden ist, wobei in den genannten Leitungen je ein Druckmodulationsventil eingesetzt ist, so daß in Abhängigkeit von Drucksteuersignalen eine Druckbeaufschlagung oder Druckentlastung der Radbremsen erfolgen kann und mit einer Pumpe, die aus dem Druckmittelvorratsbehälter fördert und über eine Druckleitung an die Bremsleitung angeschlossen ist, wobei in einer Verbindung zwischen der Pumpe und dem Hauptbremszylinder ein Drosselventil eingesetzt ist, welches in das Bremsleitungsstück zwischen dem Hauptbremszylinder und der Einmündung der Druckleitung in die Bremsleitung eingesetzt ist, wobei dem Drosselventil ein erstes Rückschlagventil, das zum Hauptbremszylinder hin sperrt und ein zweites Rückschlagventil, das zum Hauptzylinder hin öffnet parallel geschaltet sind, wobei das zweite Rückschlagventil eine Vorspannkraft aufweist. Fließt das Druckmittel also vom Hauptbremszylinder zum Radbremszylinder, so kann mit unbehinderter Pedalgeschwindigkeit der Radbremszylinder betätigt werden. Jedoch beim Lüften der Bremse wird, solange die Vorspannung im zweiten Rückschlagventil anhält, eine maximale Rückstellkraft nicht überschritten. Außerdem wird durch das immer geöffnete Drosselventil die Pulsation des Betätigungspedas so stark gedämpft, daß sie vom Fahrer nicht mehr als unangenehm empfunden wird. Ausgehend von dem Merkmal, das in der einen, nämlich der Betätigungsrichtung sich ein ungehinderter Durchfluß des Druckmittels ergibt, wird in der vorliegenden Erfindung vorgeschlagen, das Druckmittel oder genauer gesagt das Fluid in der Betätigungsrichtung mit geringerer Drosselung als gegen die Betätigungsrichtung fließen zu lassen. Ein vorgeschlagenes Drosselglied in der Hydraulikleitung soll weniger die Schwingungen dämpfen als die maximale Durchflußgeschwindigkeit beim Betätigen in der einen Durchflußrichtung begrenzen, sowie beim Zurückschieben des Fluids durch die Membranfeder der Kupplung die Durchflußgeschwindigkeit ebenfalls auf einen bestimmten Wert zu begrenzen. Letzteres soll verhindern, daß beim Einkuppeln des Getriebes an die Kurbelwelle der Verbrennungsmaschine Drehmomentspitzen im Antriebsstrang auftreten, die durch zu schnelles Einrücken der Kupplung entstehen und zur Überlastung führen, wobei sich die Einrückgeschwindigkeit auf einen experimentell festzulegenden Wert einrichten läßt, der bei schnellem Schalten nicht unterschritten wird. Trotz der Ausrüstung des Systems mit einer Drossel zur Begrenzung der Einkoppelgeschwindigkeit ist sicherzustellen, daß diese bei tiefen Temperaturen nicht unter eine zulässige Untergrenze fällt. Die Auskuppelgeschwindigkeit soll nach Möglichkeit nicht beeinträchtigt werden.

Es hat sich gezeigt, daß bei der Gestaltung von Drosselgliedern in einer hydraulischen Verstelleinrichtung für Kraftfahrzeugkupplungen auf Geräusche geachtet werden muß, die insbesondere bei hohen Durchströmgeschwindigkeiten entstehen, die dann erreicht werden, wenn die Kupplung dadurch zu schnell eingerückt wird, daß der Fahrer vom Kupplungspedal abrutscht. Es war also erforderlich, das Drosselglied mit einer Scheibe auszurüsten, die einen Durchlaß aufweist, dessen Durchmesser so gestaltet sein muß, daß vermieden wird, daß der statische Druck örtlich unter den Dampfdruck des Fluids absinkt, wobei sich Dampfblasen bilden können, deren Zusammenfallen Schallabstrahlungen verursachen können. Es erscheint zweckmäßig, den Durchlaß mit trichterförmigen Ein- und/oder Auslaß in Kanalerweiterungen zu versehen, die verhindern, daß die Strömung an dem Durchlaß abreißt.

Es ist daher die Aufgabe der Erfindung, ein Drosselglied für den Einbau in hydraulische Verstelleinrichtungen bei Fahrzeugkupplungen zu schaffen, welches die Einrückgeschwindigkeit der Kupplung auf einen maximalen Wert begrenzt, wobei eine störende Geräuschentwicklung vermieden werden soll.

Die Lösung der Aufgabe ist im kennzeichnenden Teil des Anspruchs 1 sowie in den Unteransprüchen beschrieben.

Anhand von Zeichnungen mit erklärenden Vergrößerungen wird ein Zylinder mit verschiedenen Drosselgliedern dargestellt. Es zeigen:
- Fig. 1: einen Zylinder, insbesondere einen Nehmerzylinder mit einem Drosselglied in einer Hydraulikleitung;
- Fig. 2: das Drosselglied, bestehend aus einer Scheibe in einem Bewegungsraum zwischen Hydraulikleitung und einer Zuleitung zum Zylinder in Kontakt mit einem zweiten Anschlag;
- Fig. 3: die Scheibe im Kontakt mit einem ersten Anschlag des Bewegungsraumes;
- Fig. 4: das Drosselglied gemäß Fig. 1 mit der Darstellung einer Leitung mit einem an der Anschlagscheibe anschlagenden Leitungsende;
- Fig. 5: das Drosselglied gemäß Fig. 4 mit dem Leitungsende als Anschlag für die Scheibe;
- Fig. 6: das Drosselglied mit Durchlaßkanälen entlang dem Bewegungsraum im Gehäuse;
- Fig. 7: das Drosselglied entsprechend Fig. 6, jedoch mit einer abgewandelten Scheibe;
- Fig. 8: einen Zylinder gemäß Fig. 1 mit einem geänderten Durchlaß in der Scheibe;
- Fig. 9: eine Ausschnittsvergrößerung des Drosselgliedes mit zwei trichterförmigen Erweiterungen am Durchlaß;
- Fig. 10: Ausschnittsvergrößerung des Drosselgliedes mit zwei zylindrischen Erweiterungen am Durchlaß der Scheibe;
- Fig. 11: eine Ausschnittsvergrößerung des Drosselgliedes mit zwei konischen Erweiterungen am Durchlaß der Scheibe;
- Fig. 12: eine Ausschnittsvergrößerung des Drosselgliedes mit einer einseitig konischen Erweiterung des Durchlasses der Scheibe.

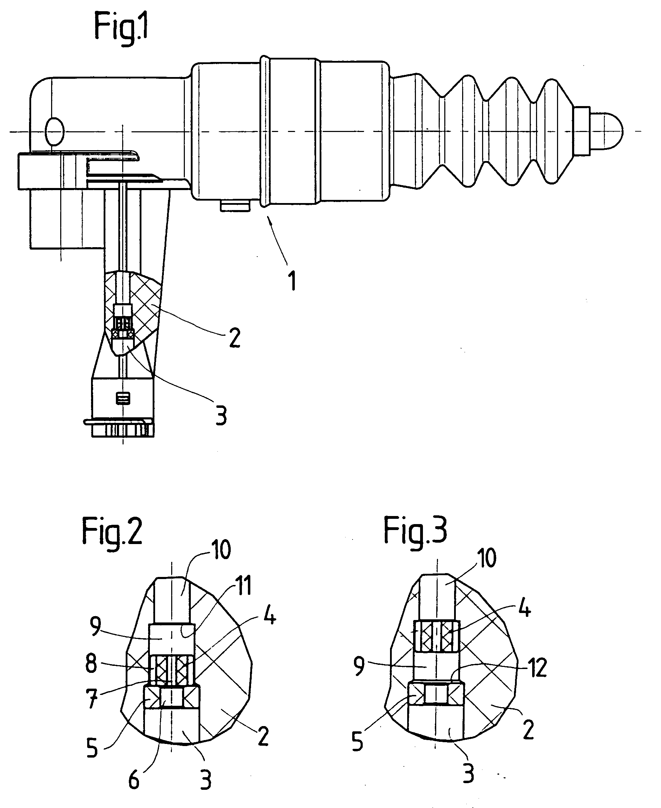

Wird mit 1 ein Zylinder einer hydraulischen Verstelleinrichtung für Kraftfahrzeugkupplungen bezeichnet, so besteht dieser Zylinder gemäß Fig. 1 aus einem Gehäuse 2, einer Hydraulikleitung 3 und einer Zuleitung 10 zum Zylinder 1. Zwischen der Hydraulikleitung 3 und der Zuleitung 10 zum Zylinder 1 ist ein Bewegungsraum 9 angeordnet, in dem sich eine Scheibe 4 in Durchflußrichtung des Fluids eingeschränkt einmal gegen einen ersten Anschlag 11 und in der anderen Durchflußrichtung gegen einen zweiten Anschlag 12 bewegen kann. Der erste Anschlag 11 wird gebildet durch einen Rezeß zwischen dem Bewegungsraum 9 und der Zuleitung 10 zum Zylinder 1. Der zweite Anschlag wird gebildet durch eine Anschlagscheibe 5, die in die Hydraulikleitung gegen ebenfalls einen Rezeß zum Bewegungsraum 9 hin angeordnet ist und eine Durchtrittsöffnung 6 aufweist. Die Scheibe 4 weist eine zentrale Bohrung 7 und am Umfang mindestens einen Durchlaßkanal 8 auf, durch den das Fluid hindurchströmen kann.

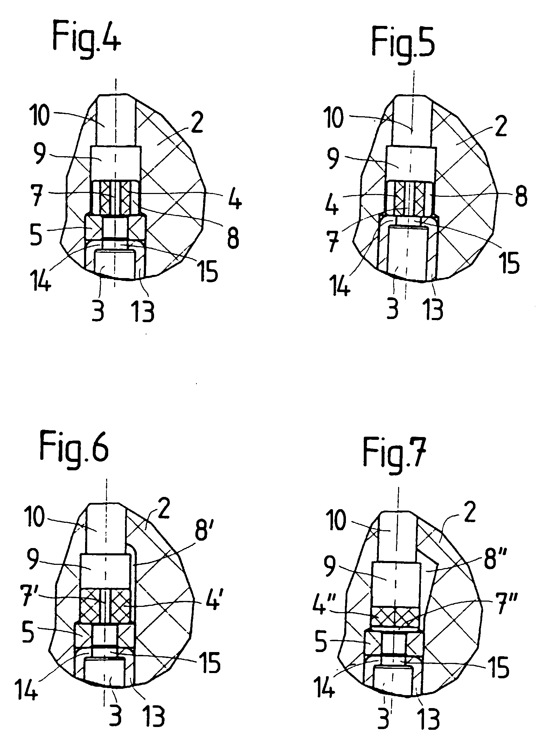

Gemäß den Figuren 4 und 5 wird eine Leitung dargestellt, die in den Anschluß der Hydraulikleitung 3 eingeschoben ist. Das Leitungsende 14 ist eingebördelt ausgeführt, wobei sich zum Zentrum hin eine Durchtrittsöffnung 15 bildet, deren Größe in etwa der Durchtrittsöffnung 6 der Anschlagscheibe 5 entspricht. Wird die Leitung 13 gegen den Rezeß des zweiten Anschlages 12 geschoben, so bildet das Leitungsende 14 den zweiten Anschlag 12 für die Scheibe 4 unter Weglassung der Anschlagscheibe 5.

Gemäß Fig. 6 ist eine Scheibe 4' dargestellt, die einen Durchlaß 7', jedoch keine Durchlaßkanäle aufweist. Vielmehr sind Durchlaßkanäle 8' im Gehäuse 2 als Bypassleitungen angeordnet, die um den ersten Anschlag 11 herumgeführt sind und in gleicher Ebene mit dem zweiten Anschlag enden, wodurch bei Anlage der Scheibe 4' am zweiten Anschlag 12 nur der Durchlaß 7' und am ersten Anschlag 11 die Summe aller Durchlaßkanäle 8' zuzüglich des Durchlasses 7' als Gesamtquerschnitt für die Strömung des Fluids wirksam werden.

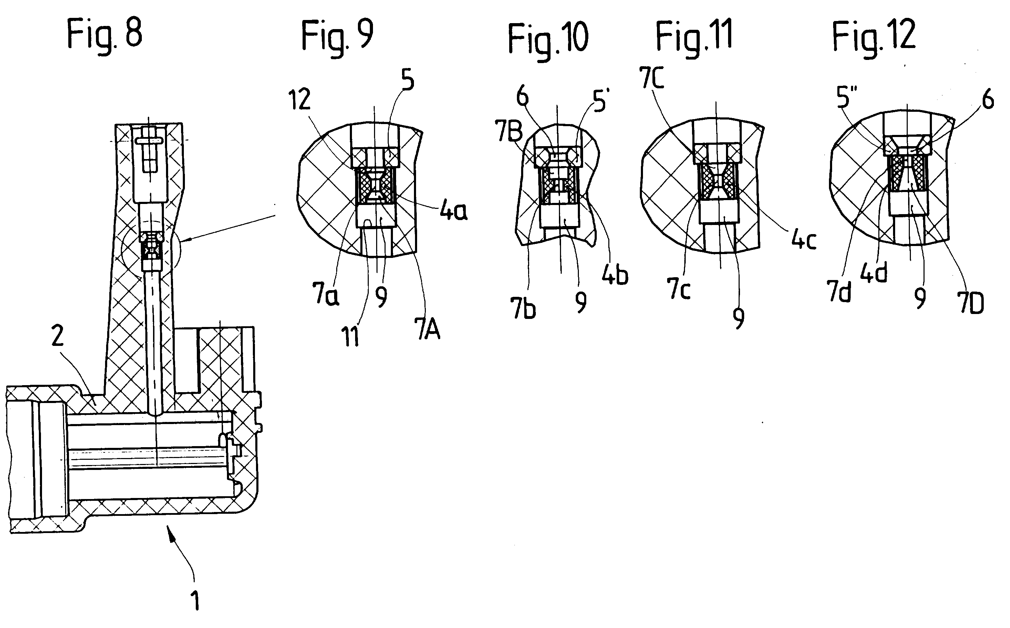

Gemäß Fig. 7 ist eine Scheibe 4'' im Bewegungsraum 9 angeordnet, die einen Durchlaß 7'' aufweist, der an ihrer Stirnfläche angeordnet ist, der zum zweiten Anschlag 12 hinweist. Ferner sind Durchlaßkanäle 8'' im Gehäuse 2 angeordnet, die ähnlich arbeiten wie die unter Fig. 6 genannten mit dem Unterschied, daß sie auf ihrer Länge im Querschnitt verändert ausgeführt sind mit der Wirkung, daß sich der Gesamtquerschnitt für die Strömung des Fluids bei der Bewegung der Scheibe 4'' zum ersten Anschlag 11 hin vergrößert.

Im Folgenden wird die Funktion des Drosselgliedes in der Verstelleinrichtung nach der Darstellung des Drosselgliedes gemäß Figuren 1 bis 3 beschrieben. Für den Fall, daß es sich bei dem dargestellten Zylinder 1 um einen Nehmerzylinder in der hydraulischen Verstelleinrichtung handelt, wird bei Betätigung eines Betätigungspedals das Fluid durch die Hydraulikleitung 3 gegen die Scheibe 4 gepreßt, wodurch die Scheibe gegen den ersten Anschlag 11 verschoben wird. Nach dem Anschlag der Scheibe 4 am ersten Anschlag 11 kann das Fluid sowohl durch die Bohrung 7 als auch durch die Durchlaßkanäle 8 strömen und in den Zylinder eindringen, wodurch dieser verstellt und die Kupplung ausgerückt wird. Wird das Betätigungspedal jedoch freigegeben, so wird der Kolben des Zylinders 1 von der Membranfeder der Kupplung zurückgeschoben und das Fluid passiert die Scheibe 4 lediglich durch die zentrale Bohrung 7, nachdem sich die Scheibe 4 gegen den zweiten Anschlag 12 angelegt hat, wodurch die Durchlaßkanäle 8 von der Anschlagscheibe 5 abgedeckt werden. In der eben beschriebenen Lage der Scheibe 4 am zweiten Anschlag 12 reduziert sich die Strömungsgeschwindigkeit des Fluids aus dem Zylinder 1 heraus in Richtung Geberzylinder, wodurch die Membranfeder der Kupplung bei schlagartigem Loslassen des Betätigungspedals sich nur in einer maximal möglichen Geschwindigkeit in die Ruhelage zurückbewegen kann. Die Auslegung der zentralen Bohrung 7 hat somit einen direkten Einfluß auf die Funktion der Verstelleinrichtung im Kraftfahrzeug, wodurch fehlerhafte Bedienungen durch den Fahrer korrigierbar sind. Es handelt sich also um eine Betätigungsgeschwindigkeitsbegrenzung, die beim Einrücken der Kupplung unangenehme Stöße beim Anfahren oder beim Schalten verhindert. Umgekehrt ist es aber auch möglich, die Summe aller Durchlaßöffnungen, nämlich der zentralen Bohrung 7 mit den Durchlaßkanälen 8 in Richtung Betätigung bzw. Ausrücken der Kupplung derart zu dimensionieren, daß eine gewisse Betätigungsgeschwindigkeit durch das Betätigungspedal nicht unterschritten wird.

Von Vorteil ist es, die Anlageflächen der Scheibe 4,4',4'' am ersten Anschlag 11 und/oder am zweiten Anschlag 12 mit einer Oberfläche zu versehen, die einen Adhäsionseffekt verhindert, das heißt, daß sich die Scheibe 4,4',4'' vom ersten oder zweiten Anschlag 11 oder 12 bei einsetzender Strömung des Fluids aus ihrer Ruhelage widerstandsfrei lösen läßt. Umgekehrt kann die Oberflächenstruktur auch an den Oberflächen des ersten und/oder zweiten Anschlages 11 und/oder 12 angebracht sein, wobei die Scheibe 4,4',4'', nicht oberflächenbehandelt zu sein braucht.

Von Vorteil ist ferner die kostengünstige Anbringung des Drosselgliedes in Form der Scheibe 4 in dem Bewegungsraum 9, wobei dieser als Übergang von der Hydraulikleitung 3 zur Zuleitung 10 zum Zylinder 1 in seinem Durchmesser angeformt werden kann, wobei lediglich der zweite Anschlag 12 von der zu befestigenden Anschlagscheibe 5 gebildet wird. Die als Ventil wirkende Scheibe 4 zeichnet sich durch geringe Kosten aus.

Hohe Durchströmgeschwindigkeiten bei unangemessen schneller Betätigung der Kupplung durch den Fahrer können in dem Durchlaß 7 der Scheibe 4 durch Kavitation Geräusche verursachen, die unzulässig hoch sind. Es wird daher vorgeschlagen, gemäß Fig. 9 eine Scheibe 4a mit einem Durchlaß 7a zu verwenden, bei welcher der Durchlaß 7a Erweiterungen 7A zu den Stirnseiten der Scheibe 4a aufweist, wobei die Erweiterungen 7A sich konisch an den Durchlaß 7a anschließen und zueinander identisch sein können. Die konische Erweiterung 7A kann in eine zylindrische Bohrung übergehen oder aber gemäß Fig. 11 ohne eine solche ausgeführt sein, wo nämlich eine konische Erweiterung 7C an einen Durchlaß 7c in einer Scheibe 4c angeordnet ist, die ihren Erweiterungswinkel bis zu den jeweiligen stirnseitigen Flächen beibehält. In Fig. 10 ist eine Scheibe 4b mit einem Durchlaß 7b gezeigt, der mit Erweiterungen 7B verbunden ist, die zylindrisch ausgeführt sind und zum Duchlaß 7b jeweils eine Stufe bilden. Der Scheibe 4b ist eine Anschlagscheibe 5' zugeordnet, die den Anschlag 12 bildet und deren Durchtrittsöffnung 6 zwei Fasen zur Erweiterung dieser Durchtrittsöffnung aufweist.

Gemäß Fig. 12 ist ein Drosselglied dargestellt, welches eine Scheibe 4d mit einem Durchtritt 7d aufweist, der mit einer Erweiterung 7D verbunden ist, die nach einer der beiden Stirnflächen der Scheibe 4d hin gerichtet ist. In diesem Falle ist die Scheibe 4d asymmetrisch ausgeführt, wobei die eine Stirnfläche mit dem Durchgang 7d und die andere Stirnfläche mit der trichterförmigen Erweiterung 7D in Verbindung steht. Den Anschlag 12 bildet eine Anschlagscheibe 5'', die ebenfalls asymmetrisch ausgeführt ist und mit ihrer Durchtrittsöffnung 6 zum Anschlag hinweist, wohingegen auf der dem Anschlag 12 gegenüberliegenden Planfläche eine Fase an die Durchtrittsöffnung 6 anschließt, die eine trichterförmige Erweiterung darstellt.

Generell lassen sich konische Erweiterungen auch mit Rundungen anschließen, wobei die Mantellinien der trichterförmigen Erweiterungen Kurven sind, die empirisch ermittelt sind und so ein Optimum in der Geräuschbildung im Betrieb darstellen.

## Patentansprüche

1. Drosselglied zum Einbau in hydraulische Verstelleinrichtungen, insbesondere für Kraftfahrzeugkupplungen mit einem Zylinder (1), entweder einem Geberzylinder oder einem Nehmerzylinder, wobei der Geberzylinder bzw. Aktuator mit dem Nehmerzylinder durch eine mit einem Fluid gefüllte Hydraulikleitung (3) in Verbindung steht, in welcher das Drosselglied angeordnet ist, welches dem Durchfluß des Fluids in mindestens einer der beiden Durchflußrichtungen einen Drosselwiderstand entgegensetzen kann,
**dadurch gekennzeichnet,**
daß das Drosselglied aus einem beweglichem Teil, insbesondere einer Scheibe (4,4',4'') besteht, welche mindestens einen Durchlaß (7,7',7'') und mindestens einen Durchlaßkanal (8,8',8'') aufweist, wobei sich die Scheibe (4,4',4'') bei Strömung des Fluids in den beiden Durchflußrichtungen hin- und herbewegen kann,
wobei die Scheibe (4,4',4'') einmal an einem ersten Anschlag (11) und ein anderes mal an einem zweiten Anschlag (12) anschlagen kann.

2. Drosselglied nach Anspruch 1,
**dadurch gekennzeichnet,**
daß sich die Scheibe (4,4',4'') in einem Bewegungsraum (9) hin- und herbewegen kann, der in die Hydraulikleitung (3) integriert ist und im Durchmesser dieser entspricht.

3. Drosselglied nach Ansprüche 1 oder 2,
**dadurch gekennzeichnet,**
daß der Bewegungsraum (9) in ein Gehäuse (2) eines Zylinders (1) im Geberzylinder oder im Nehmerzylinder integriert ist.

4. Drosselglied nach einem der Ansprüche 1 bis 3,
**dadurch gekennzeichnet,**
daß der erste Anschlag (11) von einem Rezeß in der Hydraulikleitung (3) gebildet wird.

5. Drosselglied nach einem der Ansprüche 1 bis 4,
**dadurch gekennzeichnet,**
daß der zweite Anschlag (12) von einer Anschlagscheibe (5) mit einer Durchtrittsöffnung (6) gebildet wird.

6. Drosselglied nach einem der Ansprüche 1 bis 5,
**dadurch gekennzeichnet,**
daß der zweite Anschlag (12) vom angrenzenden Leitungsende (14) mit einer Durchtrittsöffnung (15) gebildet wird.

7. Drosselglied nach einem der Ansprüche 1 bis 6,
**dadurch gekennzeichnet,**
daß bei Anlage der Scheibe (4,4',4'') am ersten Anschlag (11) ein Gesamtdurchtrittsquerschnitt gebildet wird, der sich aus der Summe der Querschnitte des Durchlassers (7,7',7'') und der Durchlaßkanäle (8,8',8'') zusammensetzt.

8. Drosselglied nach einem der Ansprüche 1 bis 7,
**dadurch gekennzeichnet,**
daß die Durchlaßkanäle (8') für die Strömung des Fluids in mindestens eine Durchflußrichtung in der Scheibe (4') und/oder im Gehäuse (2) angeordnet sind.

9. Drosselglied nach einem der Ansprüche 1 bis 8,
**dadurch gekennzeichnet,**
daß die Durchlaßkanäle (8') für die Strömung des Fluids in mindestens eine Durchflußrichtung in der Scheibe (4'') und/oder im Gehäuse (2) angeordnet sind.

10. Drosselglied nach einem der Ansprüche 1 bis 9,
**dadurch gekennzeichnet,**
daß bei Anlage der Scheibe (4,4',4'') am zweiten Anschlag (12) ein Gesamtdurchtrittsquerschnitt gebildet wird, der lediglich aus dem Durchlaß (7,7',7'') besteht,
wobei der Durchlaß (7,7',7'') im Querschnitt gleich oder kleiner ist, als die Durchtrittsöffnung (6) und/oder die Durchtrittsöffnung (15).

11. Drosselglied nach einem der Ansprüche 1 bis 10,
**dadurch gekennzeichnet,**
daß die Anlageflächen an den Anschlägen (11,12) eine bestimmte Oberflächenstruktur, insbesondere eine Rauhigkeit aufweisen.

12. Drosselglied nach einem der Ansprüche 1 bis 11,
**dadurch gekennzeichnet,**
daß die Scheibe (4,4',4'') dem Fluid bei dessen Strömung vom Geberzylinder zum Nehmerzylinder einen größeren Durchtrittsquerschnitt entgegensetzt als in der umgekehrten Durchflußrichtung.

13. Drosselglied zum Einbau in hydraulische Verstelleinrichtungen, insbesondere für Kraftfahrzeugkupplungen mit einem Zylinder (1), entweder einem Geberzylinder oder einem Nehmerzylinder, wobei der Geberzylinder bzw. Aktuator mit dem Nehmerzylinder durch einer mit einem Fluid gefüllte Hydraulikleitung (3) in Verbindung steht, in welcher das Drosselglied angeordnet ist, welches dem Durchfluß des Fluids in mindestens einer der beiden Durchflußrichtungen einen Drosselwiderstand entgegensetzen kann,
**dadurch gekennzeichnet,**
daß das Drosselglied aus einem beweglichen Teil, insbesondere einer Scheibe (4a,4b,4c,4d) besteht, welche mindestens einen Durchlaß (7a,7b,7c,7d) aufweist, wobei sich die Scheibe (4a,4b,4c,4d) bei Strömung des Fluids in den beiden Durchflußrichtungen innerhalb eines Bewegungsraumes (9) mit einem ersten Anschlag (11) und einem zweiten Anschlag (12) hin- und herbewegen kann, und wobei der Durchlaß (7a,7b,7c,7d) zu mindestens einem Anschlag (11,12) hin gerichtet Erweiterungen (7A,7B,7C,7D) aufweist, die Strömungsgeräusche des Fluids bei hohen Durchströmgeschwindigkeiten verhindern oder zumindest herabsetzten.

14. Drosselglied nach Anspruch 13,
**dadurch gekennzeichnet,**
daß die Erweiterungen (7A,7C) zu beiden Anschlägen (11,12) hin gerichtet trichterförmig und wahlweise zueinander identisch ausgeführt sind.

15. Drosselglied nach Anspruch 13,
**dadurch gekennzeichnet,**
daß die Erweiterung (7B) zu beiden Anschlägen (11,12) hin gerichtet zylindrisch und wahlweise zueinander identisch ausgeführt sind.

16. Drosselglied nach Anspruch 13,
**dadurch gekennzeichnet,**
daß die Erweiterung (7D) zu einem der Anschläge (11,12) vorzugsweise zu dem Anschlag (11) hin gerichtet, konisch ausgeführt ist.

17. Drosselglied nach einem der Ansprüche 13 bis 16,
**dadurch gekennzeichnet,**
daß der Anschlag (12) von einer Anschlagscheibe (5,5'5'') gebildet wird, die eine Durchtrittsöffnung (6,6',6'') aufweist.

18. Drosselglied nach Anspruch 17,
**dadurch gekennzeichnet,**
daß die Durchtrittsöffnung in der Anschlagscheibe (5) als zylindrische Durchgangsbohrung angeführt ist.

19. Drosselglied nach Anspruch 17,
**dadurch gekennzeichnet,**
daß die Durchtrittsöffnung in der Anschlagscheibe (5') nach beiden Seiten hin eine Fase aufweist.

20. Drosselglied nach Anspruch 17,
**dadurch gekennzeichnet,**
daß die Anschlagscheibe (5'') nur zu einer Seite hin eine trichterförmige Fase aufweist.

21. Drosselglied nach Anspruch 20,
**dadurch gekennzeichnet,**
daß die Fase in der Anschlagscheibe (5'') auf der dem Bewegungsraum (9) abgewandten Seite angeordnet ist.
